# EUROPEAN PATENT APPLICATION

(11) **EP 3 582 158 A1**
(43) Date of publication of application: **18.12.2019**
(21) Application number: 18750761.1
(22) Date of filing: 09.02.2018
(51) Int. Cl.: G06Q 10/06, G06F 3/01, G06F 3/16

(54) **DIALOG DEVICE, CONTROL DEVICE, DIALOG SYSTEM, DIALOG METHOD, AND CONTROL METHOD**

(30) Priority: 10.02.2017 JP 2017022790
(71) Applicant: Analyticware, Inc., Tokyo 164-0011 (JP)
(72) Inventor: MOMOSE, Kimio, Tokyo 150-0013 (JP); KOBAYASHI, Hirotaka, Tokyo 112-0002 (JP)
(74) Representative: Betten & Resch
(86) International application number: PCT/JP2018/004528
(87) International publication number: WO 2018/147405

(57) **Abstract**

In order to solve a conventional problem that it is not possible to easily input information related to execution of a task, an interactive apparatus includes: a topic receiving unit that receives topic information, which is a topic for identifying a task, from a user terminal; an interactive unit that acquires question information indicating a question corresponding to the topic information and transmits the question information to the user terminal, and that receives answer information indicating an answer corresponding to the question information, from the user terminal; an information group acquiring unit that acquires an information group, which is two or more pieces of information satisfying a predetermined condition, from the one or more pieces of answer information received by the interactive unit; and an accumulating unit that accumulates the information group in an external information processing apparatus. Accordingly, it is possible to easily input information related to execution of a task, through interaction.

## Description

### Technical Field

The present invention relates to an interactive apparatus and the like to which a user can efficiently input business-related information, through interaction.

### Background Art

Conventionally, there is a business trip expense settlement assisting system for assisting a person in performing an input process for settling business trip expenses related to at least either a transportation fee or an accommodation fee incurred during a business trip (see Patent Document 1). This system is a business trip expense settlement assisting system including: a mobile phone terminal that is carried around during a business trip and includes a non-contact IC card; and a business trip expense data information reading device that reads business trip expense data accumulated in a memory of the mobile phone terminal when the mobile phone terminal is placed over the business trip expense data information reading device, and transmits the business trip expense data to a business trip expense settlement data generating system for generating data for settlement of business trip expenses.

Also, conventionally, there is a sales activities assisting system for effectively assisting a person in generating report information related to business meetings (business meeting record such as a sales daily report) (see Patent Document 2). This system is a sales activities assisting system including: an electronic pen having a writing unit for inputting information to another medium, a collecting part for collecting the information input through the writing unit, and a transmitting part for wirelessly transmitting the input information collected by the collecting part; a business meeting card on which the content of business meetings is to be input using the electronic pen; and a management device having a receiving part for receiving the input information wirelessly transmitted from the electronic pen, and a generating part for generating report information related to the business meetings based on the input information received by the receiving part.

Also, conventionally, there is an integrated business assisting system obtained by integrating two or more sub systems such as a groupware sub system and an SFA sub system (see Patent Document 3). This system is an integrated business assisting system including two or more sub systems in which it is possible to transition between basic screens for executing basic functions, wherein, in a case in which there is a related screen that is a basic screen of another sub system having shared information that is shared with the basic screen, it is possible to transition from the basic screen to at least one related screen, and the sub system includes at least a groupware sub system and an SFA sub system.

### Citation List

### Patent Documents

Patent Document 1: JP 2006-285595A
Patent Document 2: JP 2009-211290A
Patent Document 3: JP 2011-90425A

### Summary of Invention

### Technical Problem

However, in conventional techniques, it is not possible to easily input information related to execution of a task. Specifically, in conventional techniques, it is not possible for a user to easily and efficiently input information related to execution of a task, with ease through interaction. Furthermore, in conventional techniques, it is not possible to easily input information related to execution of a plurality of types of tasks, while utilizing resources of existing business systems.

In view of the above-described problems, it is an object of the present invention to enable a person to easily input information related to execution of a task, through interaction.

### Solution to Problem

A first aspect of the present invention is directed to an interactive apparatus including a topic receiving unit that receives topic information, which is a topic for identifying a task, from a user terminal; an interactive unit that acquires question information indicating a question corresponding to the topic information and transmits the question information to the user terminal, and that receives answer information indicating an answer corresponding to the question information, from the user terminal; an information group acquiring unit that acquires an information group, which is two or more pieces of information satisfying a predetermined condition, from the one or more pieces of answer information received by the interactive unit; and an accumulating unit that accumulates the information group in an external information processing apparatus.

With this configuration, it is possible to easily input information related to execution of a task, through interaction.

Furthermore, a second aspect of the present invention is directed to the interactive apparatus according to the first aspect, wherein the accumulating unit accumulates two or more information groups acquired by the information group acquiring unit, in different external information processing apparatuses, according to the information groups.

With this configuration, it is possible to easily input information related to execution of tasks, through interaction, to two or more different external information processing apparatuses.

Furthermore, a third aspect of the present invention is directed to the interactive apparatus according to the first or second aspect, wherein the information group acquiring unit acquires two or more information groups, from two or more pieces of answer information in a series of interaction between the interactive apparatus and a user terminal, and the accumulating unit accumulates two or more information groups acquired by the information group acquiring unit, in different external information processing apparatuses, different databases, or different files.

With this configuration, it is possible to easily input information related to execution of tasks acquired through a series of interaction, through interaction, to two or more different external information processing apparatuses, two or more different databases, or two or more different files.

Furthermore, a fourth aspect of the present invention is directed to the interactive apparatus according to any one of the first to third aspects, wherein the interactive unit includes: a question transmitting part that acquires question information indicating a question corresponding to the topic information and transmits the question information to the user terminal; an answer receiving part that receives answer information indicating an answer corresponding to the question information, from the user terminal; and a determining part that determines whether to accumulate an information group or to acquire response information, according to the answer information, in a case in which determination by the determining part is to accumulate an information group, the information group acquiring unit acquires an information group from the answer information, and in a case in which determination by the determining part is to acquire response information, the question transmitting part acquires response information, which is a response corresponding to the answer information, and transmits the response information to the user terminal.

With this configuration, it is possible to input information related to execution of a task, with ease through interaction with the interactive apparatus. Also, it is possible to provide a user with a response as appropriate according to the content of the answer information, or to accumulate information that is constructed using the answer information.

Furthermore, a fifth aspect of the present invention is directed to the interactive apparatus according to any one of the first to fourth aspects, wherein, in response to the topic receiving unit receiving the topic information, the interactive unit transmits question information to the user terminal.

With this configuration, it is possible for a user to input information related to execution of a task, with ease through natural interaction with the interactive apparatus.

Furthermore, a sixth aspect of the present invention is directed to the interactive apparatus according to any one of the first to fourth aspects, wherein the topic receiving unit receives one of two or more stamp images from a user terminal, and the interactive unit acquires question information indicating a question corresponding to the topic information corresponding to the one stamp image, and transmits the question information to the user terminal.

With this configuration, it is possible for a user to easily input information related to execution of a task, with ease through interaction with the interactive apparatus.

Furthermore, a seventh aspect of the present invention is directed to an interactive system including the interactive apparatus according to any one of the first to fifth aspects and a control apparatus, wherein the accumulating unit transmits the information group to the control apparatus, and the control apparatus includes: an information group receiving unit that receives the information group; a determining unit that determines an information processing apparatus in which the information group is to be accumulated, according to the information group; and an accumulation control unit that accumulates the information group in the information processing apparatus determined by the determining unit.

With this configuration, it is possible for a user to input information related to execution of a plurality of types of tasks, with ease through interaction with the interactive apparatus.

Furthermore, an eighth aspect of the present invention is directed to the interactive system according to the seventh aspect, wherein the control apparatus further includes: a search unit that searches one or more external information processing apparatuses, for information that is to be output on a user terminal, according to the information group; and a control transmitting unit that transmits the information obtained by searching.

With this configuration, it is possible for a user to acquire information related to execution of a task, through interaction with the interactive apparatus.

Furthermore, a ninth aspect of the present invention is directed to the interactive system according to the seventh or eighth aspect, wherein the accumulation control unit includes: an input screen transmission instructing part that transmits an instruction to transmit an information input screen, to an information processing apparatus determined by the determining unit; an input screen receiving part that receives an input screen from the information processing apparatus in response to the instruction to transmit the input screen; and an information group input part that inputs the information group to the input screen.

With this configuration, it is possible for a user to input information related to execution of a task while utilizing resources of existing business systems, through interaction with the interactive apparatus.

Furthermore, a tenth aspect of the present invention is directed to the interactive system according to the ninth aspect, wherein the control apparatus further includes a login information storage unit in which one or more pieces of login information, which is a pair of a user ID and a password to an external information processing apparatus, are stored, and the information group input part acquires login information corresponding to the user terminal, from the login information storage unit, and also inputs the login information to the input screen.

With this configuration, it is possible for a user to log in to the information processing apparatus and input information related to execution of a task, through interaction with the interactive apparatus.

### Advantageous Effects of Invention

With the interactive apparatus according to the present invention, it is possible to easily input information related to execution of a task, through interaction.

### Brief Description of Drawings

FIG. 1 is a block diagram of an information system A in Embodiment 1.
FIG. 2 is a block diagram of the information system A in the embodiment.
FIG. 3 is a block diagram of a control apparatus 2 constituting the information system A in the embodiment.
FIG. 4 is a flowchart illustrating an operation example of an interactive apparatus 1 in the embodiment.
FIG. 5 is a flowchart illustrating an operation example of the control apparatus 2 in the embodiment.
FIG. 6 is a flowchart illustrating an operation example of a user terminal 3 in the embodiment.
FIG. 7 is a flowchart illustrating an operation example of an external processing apparatus 4 in the embodiment.
FIG. 8 is a question information management table in the embodiment.
FIG. 9 is a status transition information management table in the embodiment.
FIG. 10 is a login information management table in the embodiment.
FIG. 11 is a trip expense management table in the embodiment.
FIG. 12 is an accommodation expense management table in the embodiment.
FIG. 13 is a sales daily report management table in the embodiment.
FIG. 14 is a diagram showing a display example of the user terminal 3 in the embodiment.
FIG. 15 is a diagram showing a display example of the user terminal 3 in the embodiment.
FIG. 16 is a schematic view of a computer system in the embodiment.
FIG. 17 is a block diagram of the computer system in the embodiment.

### Description of Embodiment

Hereinafter, an embodiment of an interactive apparatus and the like will be described with reference to the drawings. It should be noted that constituent elements denoted by the same reference numerals in the embodiments perform similar operations, and thus a description thereof may not be repeated.

### Embodiment 1

In this embodiment, an information system will be described that includes an interactive apparatus that accepts a topic from a user terminal and performs interaction corresponding to the topic, the interactive apparatus extracting an information group from accepted interaction and accumulating information in one or more external apparatuses using the information group.

Furthermore, in this embodiment, an information system will be described that accumulates information in two or more external apparatuses according to topics.

Furthermore, in this embodiment, an information system will be described that accumulates information in two or more different DBs or files through a series of interaction.

Furthermore, in this embodiment, an information system will be described that includes an interactive apparatus that controls at least two patterns of scenarios consisting of a case in which interaction is merely performed and a case in which an information group is transmitted to an information processing apparatus.

Furthermore, in this embodiment, an information system will be described that includes an interactive apparatus that autonomously transmits a question to a user terminal.

Furthermore, in this embodiment, an information system will be described in which a topic is specified with a stamp (image).

Furthermore, in this embodiment, an information system will be described that searches one or more external apparatuses for information, and outputs the information in order to display it on a user terminal.

Furthermore, in this embodiment, an information system will be described that extracts an information group from accepted interaction, and inputs the information group to a screen of an external apparatus.

Moreover, in this embodiment, an information system will be described that manages a user ID and a password for accessing an external apparatus, accesses the external apparatus using the information, and inputs an information group acquired from accepted interaction to the external apparatus.

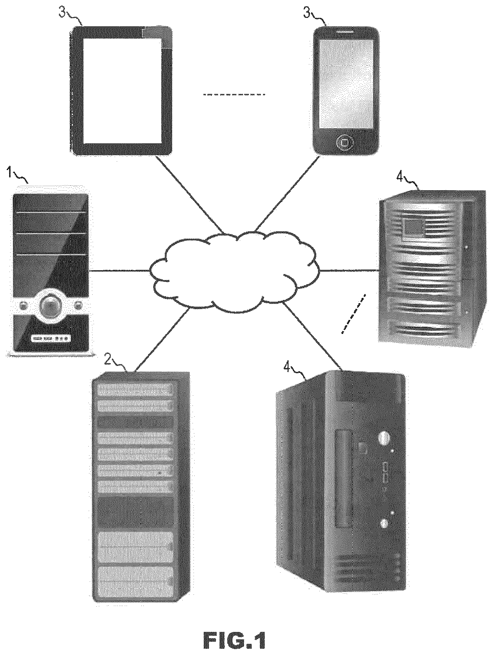

FIG. 1 is a block diagram of an information system A in this embodiment. The information system A includes an interactive apparatus 1, a control apparatus 2, one or at least two user terminals 3, and one or at least two external processing apparatuses 4. The interactive apparatus 1 is an apparatus that performs interaction with a user, and is a so-called interactive robot. The technique used by the interactive apparatus 1 for performing interaction with a user can be realized by known interactive robot techniques (see JP 2016-53606A, JP 2011-215742A, JP 2007-212919A, JP 2007-323233A, and JP 2011-054088A, for example). The interactive apparatus 1 is, for example, a so-called cloud server, ASP server, or the like, but there is no limitation on the type thereof. The user terminals 3 are, for example, so-called smartphones, personal computers, laptop computers, tablet devices, mobile phones, or the like, but there is no limitation on the type thereof.
The external processing apparatuses 4 are, for example, so-called cloud servers, ASP servers, or the like, but there is no limitation on the type thereof. The external processing apparatuses 4 may be referred to as external information processing apparatuses, and may be simply referred to as information processing apparatuses or an external processing apparatuses. The external processing apparatuses 4 are apparatuses for managing business-related information. The business-related information is, for example, information related to transportation fees and trip expenses, information related to attendance, information on sales daily reports, or the like.

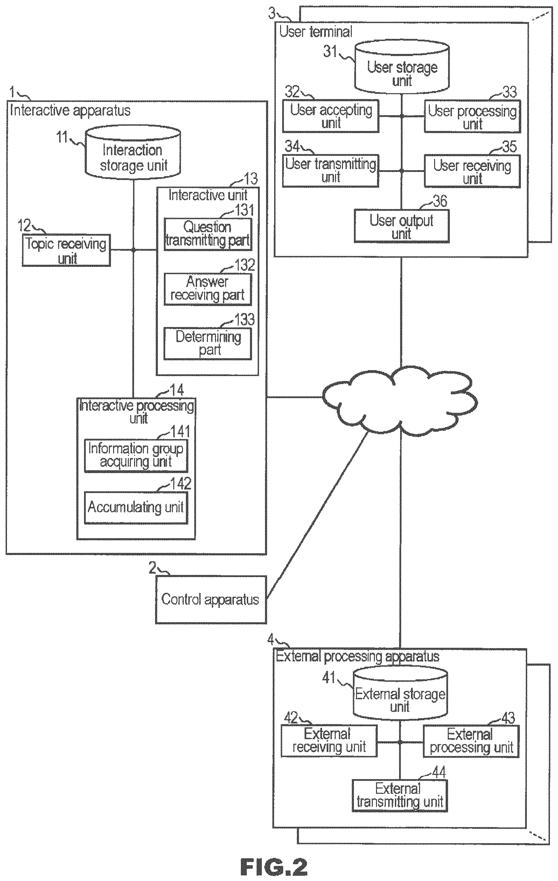

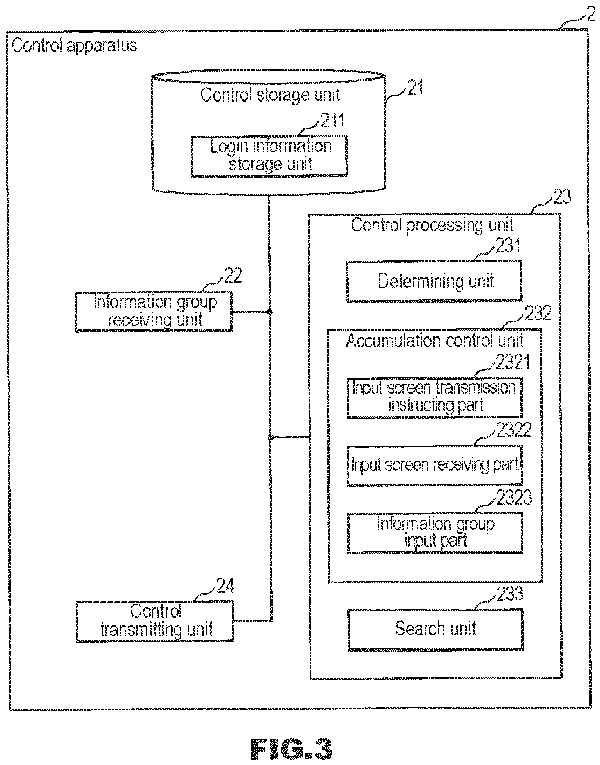

FIG. 2 is a block diagram of the information system A in this embodiment. FIG. 3 is a block diagram of the control apparatus 2 constituting the information system A.

The interactive apparatus 1 constituting the information system A includes an interaction storage unit 11, a topic receiving unit 12, an interactive unit 13, and an interactive processing unit 14.

The interactive unit 13 includes a question transmitting part 131, an answer receiving part 132, and a determining part 133.

The interactive processing unit 14 includes an information group acquiring unit 141 and an accumulating unit 142.

The control apparatus 2 includes a control storage unit 21, an information group receiving unit 22, a control processing unit 23, and a control transmitting unit 24.

The control storage unit 21 includes, for example, a login information storage unit 211.

The control processing unit 23 includes a determining unit 231, an accumulation control unit 232, and a search unit 233.

The accumulation control unit 232 includes an input screen transmission instructing part 2321, an input screen receiving part 2322, and an information group input part 2323.

The user terminals 3 each include a user storage unit 31, a user accepting unit 32, a user processing unit 33, a user transmitting unit 34, a user receiving unit 35, and a user output unit 36.

The external processing apparatuses 4 each include an external storage unit 41, an external receiving unit 42, an external processing unit 43, and an external transmitting unit 44.

In the interaction storage unit 11 constituting the interactive apparatus 1, various types of information are stored. The various types of information are, for example, interaction control information, processing control information, or one or at least two stamps. The interaction control information is information for performing interaction with a user. The interaction control information is information for acquiring question information that is to be transmitted to the user terminal 3 according to answer information that has been input by a user. The interaction control information is, for example, information for specifying transition of interaction (see JP 2006-53470A, and JP 2011-215742A, for example). The interaction control information is, for example, a group of information consisting of pairs of answer information from a user and a response (typically, question information) from the interactive apparatus 1. The interaction control information includes, for example, question information. Typically, in the case in which a response from the interactive apparatus 1 is not a question, information constituting the response is referred to as response information. Note that the question information may be considered as including the response information. It is also possible that the interaction control information is information for acquiring response information. The interaction control information may have various structures, and there is no limitation on the structure. The processing control information is information for categorizing answer information that has been input by a user. In this example, the answer information is categorized into a first class in which the received answer information is answer information for acquiring question information according to the answer information, or a second class in which an information group extracted from the answer information is information that is to be accumulated. The stamp in this example is an image for specifying a topic for identifying a task.

The topic receiving unit 12 receives topic information, which is a topic for identifying a task, from the user terminal 3. The topic information is, for example, a stamp for specifying a topic for identifying a task. The topic information is, for example, a topic identifier for identifying a topic. The topic identifier is a character string for specifying a task, an ID for specifying a task, or the like. Note that a stamp for specifying a topic also may be considered as a topic identifier.

It is preferable that the topic receiving unit 12 receives one of the two or more stamp images, from the user terminal 3. The topic is, for example, settlement of trip expenses and transportation fees, attendance management, generation of a sales daily report, or the like.

The interactive unit 13 acquires question information corresponding to the topic information, and transmits it to the user terminal 3. The interactive unit 13 acquires question information corresponding to the topic information, from the interaction storage unit 11.

The interactive unit 13 acquires question information corresponding to the topic information corresponding to the one stamp image, from the interaction storage unit 11, and transmits it to the user terminal 3.

Furthermore, when the topic receiving unit 12 receives topic information, the interactive unit 13 transmits question information to the user terminal 3.

Furthermore, the interactive unit 13 receives answer information corresponding to the transmitted question information, from the user terminal 3. The question information is information indicating a question. The question information is, for example, a character string, a voice, or the like. The answer information is information indicating an answer. The answer information is, for example, a character string, a voice, or the like.

Furthermore, if a next response corresponding to the answer information received from the user terminal 3 cannot be detected, the interactive unit 13 may transmit the question information transmitted immediately before, again to the user terminal 3. If a next response corresponding to the answer information received from the user terminal 3 cannot be detected, the interactive unit 13 may perform ordinary interactive processing and acquire response information indicating a response that is to be output to the user next. The processing that acquires response information is a known technique.

The question transmitting part 131 acquires question information indicating a question, from the interaction storage unit 11, and transmits it to the user terminal 3. For example, the question transmitting part 131 acquires question information indicating a question corresponding to the received topic information, from the interaction storage unit 11, and transmits it to the user terminal 3. For example, the question transmitting part 131 constructs question information for acquiring missing information, and transmits the question information to the user terminal 3. For example, registration information specifying information (e.g., a group of attribute names, etc.) for specifying information that has to be acquired according to topics is stored in the interaction storage unit 11, and the question transmitting part 131 detects information (e.g., "accommodation fee") that is specified with the registration information specifying information and that is not included in one or at least two pieces of answer information received through a series of interaction, constructs question information (e.g., "Please input the accommodation fee") for acquiring the information that is not included, and transmits it to the user terminal 3.

The answer receiving part 132 receives answer information indicating an answer corresponding to the question information, from the user terminal 3.

The determining part 133 determines whether to accumulate the information group or to acquire response information according to the answer information. The determining part 133 may determine whether to accumulate the information group according to the answer information, to determine that the answer information is a search instruction, or to acquire response information according to the answer information. The acquiring response information according to the answer information is that the interactive apparatus 1 performs interaction with a user, without transmitting information to the control apparatus 2 or the external processing apparatuses 4.

The determining part 133 determines, for example, whether to acquire response information corresponding to the answer information (e.g., class 1), or to acquire an information group from the answer information and accumulate the information (e.g., class 2), using the processing control information in the interaction storage unit 11. In this case, the processing control information is, for example, learning information used in learning for classifying answer information. This learning can be realized by machine learning such as deep learning or SVM.

For example, the determining part 133 performs morphological analysis on the answer information, acquires one or more independent words, and determines whether or not the class of each of the one or more independent words matches a class managed in association with the question information, wherein, if they match each other, it is determined that the class is class 2, and, if not, it is determined that the class is class 1. The determining part 133 applies the answer information to learning information, and classifies the answer information to class 1 or class 2 through an algorithm of machine learning such as deep learning or SVM. In this case, typically, training of a plurality of pieces of answer information belonging to class 1 and a plurality of pieces of answer information belonging to class 2 is performed in advance through an algorithm of machine learning, and the acquired processing control information is accumulated in the interaction storage unit 11. The determining part 133 may acquire answer information according to the answer information, and accumulate the information group (e.g., class 3).

The interaction control unit 14 performs processing on the received answer information. This processing is, for example, the processing that is performed by the information group acquiring unit 141 or the accumulating unit 142. This processing is, for example, processing that determines whether or not to accumulate an information group. This determination processing may be, for example, processing in which the interaction control unit 14 determines whether or not information groups that have to be accumulated have been all acquired, wherein, if they have been all acquired, it is determined that the accumulating processing is to be performed, and, if not, information for specifying missing information is given to the interactive unit 13 so that the interactive unit 13 can acquire new question information for acquiring missing information. For example, information for specifying information that has to be acquired (e.g., "departure station", "arrival station", "transportation fee") is stored in the interaction storage unit 11 in association with topic information (e.g., trip expenses and transportation fees), and the interaction control unit 14 acquires information for specifying missing information, from the information in the interaction storage unit 11 and the information acquired from the answer information.

The information group acquiring unit 141 acquires an information group, which is two or more pieces of information satisfying a predetermined condition, from the one or more pieces of answer information received by the interactive unit 13. The predetermined condition is, for example, managed for each topic. If the topic is "settlement of trip expenses and transportation fees", the predetermined condition is, for example, that the information matches any of "station name, transportation fee, hotel name, and accommodation fee". If the topic is "attendance management", the predetermined condition is, for example, that the information is information indicating the time. If the topic is "generation of a sales daily report", the predetermined condition is, for example, that the information matches any of "date, company name, person in charge in the other party, start time, end time, and content". This predetermined condition is stored, for example, in the interaction storage unit 11. The information group that is acquired by the information group acquiring unit 141 may contain a topic identifier and the like that are information other than the information that is to be accumulated.

It is preferable that the information group acquiring unit 141 acquires two or more information groups, from two or more pieces of answer information in a series of interaction between the interactive apparatus 1 and the user terminal 3. The series of interaction is interaction during which at least a user inputs answer information twice or more and the interactive apparatus 1 outputs response information once or more to the user terminal 3 between the twice or more pieces of answer information.

The accumulating unit 142 accumulates the information group acquired by the information group acquiring unit 141, in an external information processing apparatus. The external information processing apparatus in this example is the external processing apparatus 4. If the information group contains information that is not to be accumulated, such as a topic identifier, the processing that accumulates the information group in an external information processing apparatus is accumulating part of the information group in an external information processing apparatus.

The accumulating unit 142 accumulates the information group in different external processing apparatuses 4 according to the two or more information groups acquired by the information group acquiring unit 141. That is to say, the accumulating unit 142 accumulates the two or more information groups acquired by the information group acquiring unit 141, in the external processing apparatuses 4 respectively corresponding to the information groups. The accumulating the information group in the external processing apparatus 4 may be performing some sort of processing for accumulating the information group in the external processing apparatus 4. Some sort of processing is transmitting the information group to the external processing apparatus 4, transmitting the information group to the control apparatus 2, instructing the external processing apparatus 4 to accumulate the information group, instructing the control apparatus 2 to accumulate the information group, or the like.

The accumulating unit 142 accumulates the two or more information groups acquired by the information group acquiring unit 141, in different external processing apparatuses 4, different databases, or different files. The accumulating unit 142 typically accumulates the two or more information groups acquired by the information group acquiring unit 141, in different external processing apparatuses 4, different databases, or different files, according to topics respectively corresponding to the information groups.

The accumulating unit 142 typically transmits the information group to the control apparatus 2. The processing that transmits the information group to the control apparatus 2 is performed in order to accumulate the information group in the external processing apparatus 4.

In the control storage unit 21 constituting the control apparatus 2, various types of information are stored. The various types of information are, for example, later-described login information.

In the login information storage unit 211, one or more pieces of login information are stored. The login information is information for logging in to the external processing apparatus 4, and is, for example, a pair of a user ID and a password to the external processing apparatus 4. If there are two or more external processing apparatuses 4, it is preferable that the login information storage unit 211 manages one or more pieces of login information for each of the external processing apparatuses 4.

The information group receiving unit 22 receives the information group. The information group receiving unit 22 receives the information group from the interactive apparatus 1.

The control processing unit 23 performs processing that controls the control apparatus 2. The control processing is accumulation apparatus determining processing that determines the external processing apparatus 4 in which the information group is to be accumulated, accumulation control processing for accumulating the information group in the external processing apparatus 4, search processing using the information group, or the like. For example, the control processing unit 23 analyzes the information group, and performs determination processing that determines whether the information group is information that is to be accumulated in the external processing apparatus 4 or is information containing an instruction to search the external processing apparatuses 4. This determination processing is also a classification problem of information groups, and can be realized by an algorithm of machine learning such as deep learning or SMV.

The determining unit 231 constituting the control processing unit 23 performs apparatus determining processing. The determining unit 231 determines an information processing apparatus (an external processing apparatus 4) in which the information group is to be accumulated, or an external processing apparatus 4 that is to be searched using the information group, according to the information group. The one or at least two external processing apparatuses 4 are, for example, information processing apparatuses for managing trip expenses and transportation fees, information processing apparatuses for managing attendance, information processing apparatuses for managing sales daily reports, or the like. The information processing apparatuses for managing trip expenses and transportation fees, the information processing apparatuses for managing attendance, the information processing apparatuses for managing sales daily reports, and the like are known server apparatuses, and thus a detailed description thereof has been omitted. For example, the determining unit 231 acquires an external processing apparatus identifier for identifying an external processing apparatus 4 corresponding to the topic identifier contained in the received information group. The external processing apparatus identifier is, for example, an IP address, a MAC address, or the like for communicating with the external processing apparatus 4. For example, the determining unit 231 classifies an information group through an algorithm of machine learning or the like, determines a class of the information group, and acquires an external processing apparatus identifier for identifying an external processing apparatus 4 corresponding to the class. The class of the information group is information for specifying classification of the information group, and is, for example, trip expenses and transportation fees, attendance, sales daily reports, or the like. The processing that classifies an information group is a known technique and thus a detailed description thereof has been omitted.

The accumulation control unit 232 accumulates the information group in the information processing apparatus determined by the determining unit 231. There is no limitation on the processing that accumulates the information group, as long as it is processing that contributes to accumulation of the information group. That is to say, the processing that accumulates the information group may be processing that transmits the information group to the determined external processing apparatus 4, or may be processing that accesses the determined external processing apparatus 4 and inputs the information group to the external processing apparatus 4, for example.

The accumulation control unit 232 may accumulate only part of the received information group, in the information processing apparatus determined by the determining unit 231. This processing is also processing that accumulates the information group in an information processing apparatus. For example, if the information group contains information that is not to be accumulated, such as a topic identifier, information obtained by excluding the information that is not to be accumulated, from the information group, is accumulated in an information processing apparatus.

The input screen transmission instructing part 2321 constituting the accumulation control unit 232 transmits an instruction to transmit an information input screen, to the information processing apparatus determined by the determining unit 231. For example, the input screen transmission instructing part 2321 accesses the external processing apparatus 4 determined by the determining unit 231, and transmits an instruction to transmit the input screen stored in the external processing apparatus 4, to the external processing apparatus 4. The input screen may be information constituting the information input screen. The input screen may be, for example, defined by an HTML, an XML, or the like, or may be constituted by images and programs constituting the screen. The input screen may be information for displaying an input screen on the control apparatus 2.

If a result of the determination processing performed by the control processing unit 23 is that the information group is information that is to be accumulated in the external processing apparatus 4, the accumulation control unit 232 accumulates the information group in the information processing apparatus determined by the determining unit 231.

The input screen receiving part 2322 receives an input screen from the information processing apparatus in response to the instruction to transmit the input screen. The input screen receiving part 2322 receives an input screen from the external processing apparatus 4 that transmitted the transmission instruction.

The information group input part 2323 inputs the information group to the input screen. For example, the information group input part 2323 analyzes the input screen, and detects an identifier of information that is to be input, and a field that accepts input. For example, the information group input part 2323 determines an identifier corresponding to each piece of information constituting the information group, and inputs information to a field that is paired with the identifier.

The information group input part 2323 acquires login information corresponding to the user terminal 3, from the login information storage unit 211, and also inputs the login information to the input screen. If the input screen received by the input screen receiving part 2322 is a login screen, the information group input part 2323 acquires login information of a user corresponding to the user terminal 3, from the login information storage unit 211, and inputs the login information to the input screen.

The information group input part 2323 performs image analysis on the input screen, and inputs the information group to the input screen. This processing is a known technique, and thus a detailed description thereof has been omitted.

The search unit 233 searches one or more external information processing apparatuses for information that is to be output on the user terminal 3, according to the information group. If the search unit 233 detects that the information group contains a search condition, the search unit 233 searches the external processing apparatuses 4 for information that is to be output on the user terminal 3, using the search condition in the information group.

If a result of the determination processing performed by the control processing unit 23 is that the information group is information for searching the external processing apparatuses 4, the search unit 233 searches the information processing apparatus determined by the determining unit 231, for information that is to be output on the user terminal 3, using the information group.

The control transmitting unit 24 transmits the information obtained by the search unit 233. The control transmitting unit 24 transmits the obtained information to the interactive apparatus 1 or the user terminal 3. If the information is transmitted to the interactive apparatus 1, the information obtained by searching is transmitted via the interactive apparatus 1 to the user terminal 3.

In the user storage unit 31 constituting the user terminal 3, various types of information are stored. The various types of information are, for example, a user identifier. The user identifier is information for identifying a user, but also may be information for identifying a user terminal 3.

The user accepting unit 32 accepts various types of instructions and information. The user accepting unit 32 typically accepts a user's voice. Note that the user accepting unit 32 may accept input from a user using a touch panel, a keyboard, or the like. The various types of instructions and information are, for example, topic information, answer information, or the like.

The various types of instructions and information may be input through any part such as a microphone, a touch panel, a keyboard, a mouse, a menu screen, or the like. The user accepting unit 32 may be realized by a device driver for an input part such as a microphone, a keyboard, or the like, or control software for a menu screen, for example.

The user processing unit 33 performs various types of processing. The various types of processing are, for example, processing that performs speech recognition on an input voice and acquires a character string. Note that the user terminal 3 does not have to perform the speech recognition processing. The various types of processing are, for example, processing that performs voice synthesis on the character string received by the user receiving unit 35 and acquires voice data.

The user transmitting unit 34 transmits various types of instructions and information to the interactive apparatus 1. The various types of instructions and information are, for example, topic information, answer information, or the like.

The user receiving unit 35 receives various types of information. The various types of information are, for example, question information, an accumulation result, or a search result. The question information or the search result may be voice data or may be a character string, that is, there is no limitation on the data type.

The user output unit 36 outputs various types of information. The various types of information are question information, or a search result. The output in this example is typically display on a display screen or outputting voice, but is a concept that encompasses projection using a projector, transmission to an external apparatus, accumulation in a storage medium, delivery of a processing result to another processing apparatus or another program, and the like.

In the external storage unit 41 constituting the external processing apparatus 4, various types of information are stored. The various types of information are, for example, a database for managing trip expenses and transportation fees, a database for managing attendance, a database for managing sales daily reports, or the like.

The external receiving unit 42 receives various types of information, instructions, and the like. The various types of information, instructions, and the like are, for example, instructions to transmit various types of screens, an information group that is to be accumulated, or a search condition acquired from an information group. The instructions to transmit various types of screens are, for example, an instruction to transmit a login screen, or an instruction to transmit an input screen of an information group.

The external processing unit 43 performs various types of processing. The various types of processing are processing that accumulates the information group received by the external receiving unit 42 in the external storage unit 41, or processing that performs a search using the search condition received by the external receiving unit 42. The search processing is processing that searches the external storage unit 41.

The external transmitting unit 44 transmits a result of the search performed by the external processing unit 43. The search result is transmitted typically to the control apparatus 2. Note that the search result may be transmitted to the interactive apparatus 1 or the user terminal 3.

The interaction storage unit 11, the control storage unit 21, the login information storage unit 211, the user storage unit 31, and the external storage unit 41 are preferably non-volatile storage media, but may also be realized by volatile storage media.

There is no limitation on the procedure in which information is stored in the interaction storage unit 11 and the like. For example, information may be stored in the interaction storage unit 11 and the like via a storage medium, information transmitted via a communication line or the like may be stored in the interaction storage unit 11 and the like, or information input via an input device may be stored in the interaction storage unit 11 and the like.

The topic receiving unit 12, the answer receiving part 132, the input screen receiving part 2322, the user receiving unit 35, and the external receiving unit 42 are realized typically by wireless or wired communication parts.

The interactive unit 13, the determining part 133, the interactive processing unit 14, the information group acquiring unit 141, the control processing unit 23, the information group input part 2323, the user processing unit 33, and the external processing unit 43 may be realized, for example, by MPUs, memories, or the like. Typically, the processing procedure of the interactive unit 13 is realized typically by software, and the software is stored in a storage medium such as a ROM. Note that the processing procedure may be realized also by hardware (dedicated circuits).

The question transmitting part 131, the accumulating unit 142, the input screen transmission instructing part 2321, the control transmitting unit 24, the user transmitting unit 34, and the external transmitting unit 44 are realized typically by wireless or wired communication parts.

The user output unit 36 may be considered to include or not to include an output device, such as a display screen or a speaker. The user output unit 36 may be considered to include or not to include an output device, such as a display screen or a speaker. The output unit 14 may be realized by driver software for an output device, a combination of driver software for an output device and the output device, or the like.

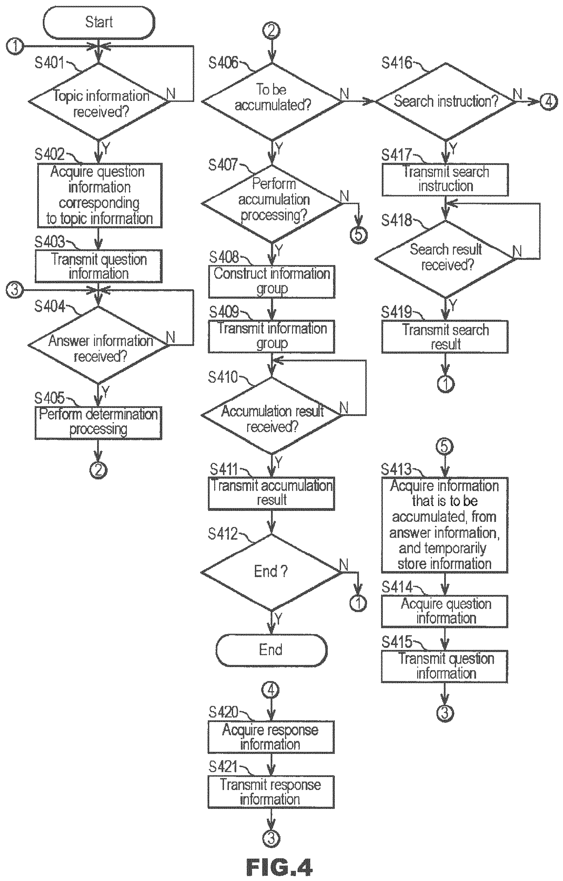

Next, an operation of the information system A will be described. First, an operation example of the interactive apparatus 1 will be described with reference to the flowchart in FIG. 4,.

(Step S401) The topic receiving unit 12 determines whether or not it has received topic information from the user terminal 3. If it has received topic information, the procedure advances to step S402, and, if not, the procedure returns to step S401.

(Step S402) The question transmitting part 131 acquires question information corresponding to the topic information received in step S401.

(Step S403) The question transmitting part 131 transmits the question information acquired in step S402, to the user terminal 3 that transmitted the topic information.

(Step S404) The answer receiving part 132 determines whether or not it has received answer information corresponding to the question information, from the user terminal 3. If it has received answer information, the procedure advances to step S405, and, if not, the procedure returns to step S404.

(Step S405) The determining part 133 determines whether the answer information is information containing an information group that is to be accumulated, a search instruction, or neither of them, according to the answer information received in step S404. The case in which the information is neither of them corresponds to a case in which response information is acquired according to the answer information.

(Step S406) If it is determined from a result of the determination in step S405 that the answer information is information containing an information group that is to be accumulated, the interaction control unit 14 advances the procedure to step S407, and, if not, the interaction control unit 14 advances the procedure to step S416.

(Step S407) The interaction control unit 14 determines whether or not to accumulate the information group. If it is determined that the information group is to be accumulated, the procedure advances to step S408, and, if not, the procedure advances to step S413. For example, if it is determined based on the registration information specifying information in the interaction storage unit 11 that all pieces of information that have to be accumulated have been all acquired, the interaction control unit 14 advances the procedure to step S408, and, if not, the interaction control unit 14 advances the procedure to step S413.

(Step S408) The information group acquiring unit 141 acquires one or at least two pieces of information satisfying a predetermined condition, which are in a group of information corresponding to the topic information, from the one or at least two pieces of answer information received by the interactive unit 13, and constructs an information group. If the information group acquiring unit 141 acquires information that is to be accumulated, from the latest answer information received by the interactive unit 13, and information that is to be accumulated has been accumulated in an unshown buffer, the information group acquiring unit 141 constructs an information group also including the information in the buffer.

(Step S409) The accumulating unit 142 transmits the information group acquired in step S408, to the control apparatus 2.

(Step S410) The interaction control unit 14 receives an accumulation result (e.g., succeeded or failed) from the control apparatus 2, in response to the transmission of the information group in step S409.

(Step S411) The interactive unit 13 transmits the accumulation result received in step S410, to the user terminal 3.

(Step S412) The interaction control unit 14 determines whether or not to end the processing. If the processing is to be ended, the processing is ended, and, if not, the procedure returns to step S401. The case in which the processing is to be ended corresponds to, for example, a case in which an end instruction is received from the user terminal 3.

(Step S413) The information group acquiring unit 141 acquires information that is to be accumulated, from the answer information recently received by the interactive unit 13, and temporarily stores it in an unshown buffer.

(Step S414) The question transmitting part 131 acquires question information for acquiring missing information. This question information may be stored in advance in the interaction storage unit 11, or the question transmitting part 131 may construct question information (e.g., "Please input the transportation fee") by substituting detected missing information (e.g., "transportation fee") to a template sentence (e.g., "Please input <missing information>.") in the interaction storage unit 11.

(Step S415) The question transmitting part 131 transmits the question information acquired in step S414, to the user terminal 3. The procedure returns to step S404.

(Step S416) If it is determined from a result of the determination in step S405 that the answer information is a search instruction, the interaction control unit 14 advances the procedure to step S417, and, if not, the interaction control unit 14 advances the procedure to step S420.

(Step S417) The interaction control unit 14 transmits the search instruction to the determined external processing apparatus 4.

(Step S418) The interaction control unit 14 determines whether or not it has received a search result in response to the transmission of the search instruction in step S417. If it has received a search result, the procedure advances to step S419, and, if not, the procedure returns to step S418.

(Step S419) The interaction control unit 14 transmits the received search result to the interactive apparatus 1. The procedure returns to step S401.

(Step S420) The interactive unit 13 acquires response information corresponding to the received answer information, using the interaction control information in the interaction storage unit 11. This processing is processing of a commonly used interactive robot, and thus a detailed description thereof has been omitted.

(Step S421) The interactive unit 13 transmits the response information acquired in step S420, to the user terminal 3.

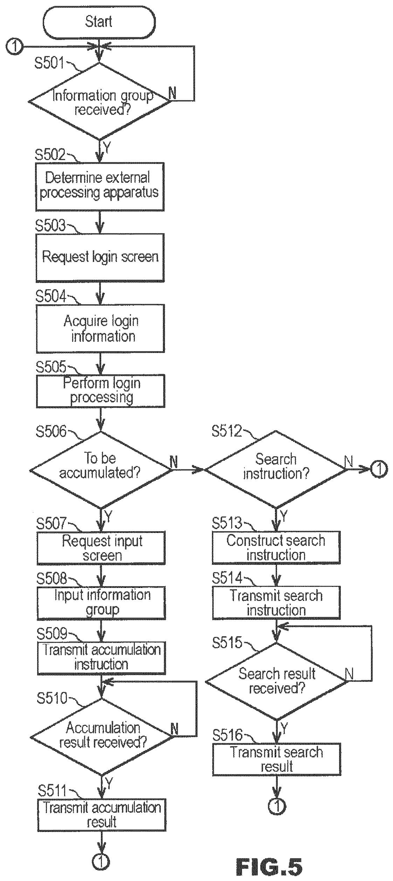

Next, an operation example of the control apparatus 2 will be described with reference to the flowchart in FIG. 5.

(Step S501) The information group receiving unit 22 determines whether or not it has received an information group. If it has received an information group, the procedure advances to step S502, and, if not, the procedure returns to step S501.

(Step S502) The determining unit 231 determines an external processing apparatus 4 in which the information group is to be processed, according to the information group.

(Step S503) The input screen transmission instructing part 2321 transmits an instruction to transmit a login screen, to the external processing apparatus 4 determined in step S502. The input screen receiving part 2322 receives a login screen from the external processing apparatus 4, in response to the transmission instruction in step S503.

(Step S504) The information group input part 2323 acquires login information corresponding to the user terminal 3, from the login information storage unit 211.

(Step S505) The information group input part 2323 also inputs the login information acquired in step S504 to the login screen, and transmits it to the external processing apparatus 4. With this processing, the login processing is performed on the external processing apparatus 4.

(Step S506) The control processing unit 23 determines whether or not the information group received in step S501 is to be accumulated. If it is to be accumulated, the procedure advances to step S507, and, if not, the procedure advances to step S512.

(Step S507) The input screen transmission instructing part 2321 transmits an instruction to transmit an information input screen, to the external processing apparatus 4 determined by the determining unit 231.

(Step S508) The input screen receiving part 2322 receives an input screen from the external processing apparatus 4 in response to the instruction to transmit the input screen in step S507. The information group input part 2323 inputs the information group received in step S501, to the received input screen.

(Step S509) The information group input part 2323 inputs an accumulation instruction, to the input screen to which the information group has been input. The information group input part 2323 transmits an instruction to accumulate the information group, to the external processing apparatus 4.

(Step S510) The accumulation control unit 232 determines whether or not it has received an accumulation result in response to the transmission of the accumulation instruction in step S509. If it has received an accumulation result, the procedure advances to step S511, and, if not, the procedure returns to step S510.

(Step S511) The accumulation control unit 232 transmits the accumulation result received in step S510, to the interactive apparatus 1. The procedure returns to step S501.

(Step S512) The control processing unit 23 determines whether or not the information group received in step S501 contains a search instruction. If it contains a search instruction, the procedure advances to step S513, and, if not, the procedure returns to step S501.

(Step S513) The search unit 233 constructs a search instruction from the received information group.

(Step S514) The search unit 233 transmits the search instruction constructed in step S513, to the external processing apparatus 4.

(Step S515) The search unit 233 determines whether or not it has received a search result from the external processing apparatus 4 in response to the transmission of the search instruction. If it has received a search result, the procedure advances to step S516, and, if not, the procedure returns to step S515.

(Step S516) The search unit 233 transmits the search result received in step S515 to the interactive apparatus 1. The procedure returns to step S501.

In the flowchart in FIG. 5, if the received information group is to be accumulated, it is sufficient that the control apparatus 2 accumulates the information group in the external processing apparatus 4 corresponding to the information group. If the received information group corresponds to a search instruction, it is preferable that the control apparatus 2 searches the external processing apparatus 4 corresponding to the information group, for information, using the search instruction. That is to say, it is not necessary for the control apparatus 2 to perform processing such as transmission of an instruction to transmit a screen, to the external processing apparatus 4, or the like.

Note that the procedure is terminated by powering off or an interruption at completion the end of the process in the flowchart in FIG. 5.

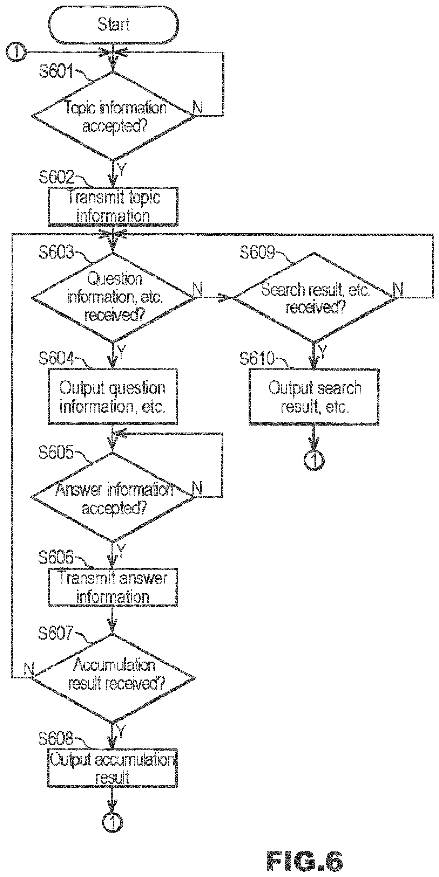

Next, an operation example of the user terminal 3 will be described with reference to the flowchart in FIG. 6.

(Step S601) The user accepting unit 32 determines whether or not it has accepted topic information. If it has accepted topic information, the procedure advances to step S602, and, if not, the procedure returns to step S601.

(Step S602) The user transmitting unit 34 transmits the topic information accepted in step S601, to the interactive apparatus 1.

(Step S603) The user receiving unit 35 determines whether or not it has received question information and the like from the interactive apparatus 1. If it has received question information and the like, the procedure advances to step S604, and, if not, the procedure advances to step S609. The question information and the like are question information or response information.

(Step S604) The user output unit 36 outputs the question information and the like received in step S603. The output is preferably outputting voice, but also may be display on a display screen, or the like.

(Step S605) The user accepting unit 32 determines whether or not it has accepted answer information. If it has accepted answer information, the procedure advances to step S606, and, if not, the procedure advances to step S607.

(Step S606) The user transmitting unit 34 transmits the answer information accepted in step S605, to the interactive apparatus 1.

(Step S607) The user receiving unit 35 determines whether or not it has received an accumulation result. If it has received an accumulation result, the procedure advances to step S608, and, if not, the procedure returns to step S603.

(Step S608) The user output unit 36 outputs the accumulation result received in step S607. The procedure returns to step S601.

(Step S609) The user receiving unit 35 determines whether or not it has received a search result or the like from the interactive apparatus 1. If it has received a search result or the like, the procedure advances to step S610, and, if not, the procedure returns to step S603. The search result or the like is a search result, an error message, or the like.

(Step S610) The user output unit 36 outputs the search result or the like received in step S609. The procedure returns to step S601.

Note that the procedure is terminated by powering off or an interruption at completion the end of the process in the flowchart in FIG. 6.

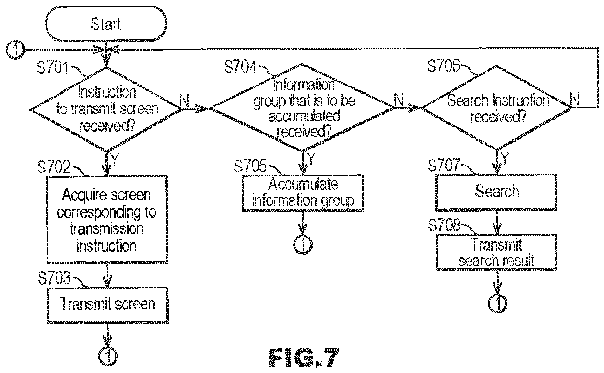

Next, an operation example of the external processing apparatus 4 will be described with reference to the flowchart in FIG. 7.

(Step S701) The external receiving unit 42 determines whether or not it has received an instruction to transmit a screen. If it has received a transmission instruction, the procedure advances to step S702, and, if not, the procedure advances to step S704.

(Step S702) The external processing unit 43 acquires a screen corresponding to the transmission instruction received in step S701.

(Step S703) The external transmitting unit 44 transmits the screen acquired in step S702. The procedure returns to step S701.

(Step S704) The external receiving unit 42 determines whether or not it has received an information group that is to be accumulated. If it has received an information group, the procedure advances to step S705, and, if not, the procedure advances to step S706.

(Step S705) The external processing unit 43 accumulates the information group received in step S704, in the external storage unit 41. The procedure returns to step S701.

(Step S706) The external receiving unit 42 determines whether or not it has received a search instruction. If it has received a search instruction, the procedure advances to step S707, and, if not, the procedure returns to step S701.

(Step S707) The external processing unit 43 searches the external storage unit 41 for information, according to the search instruction received in step S706.

(Step S708) The external transmitting unit 44 transmits the search result in step S707. The procedure returns to step S701.

Note that the procedure is terminated by powering off or an interruption at completion the end of the process in the flowchart in FIG. 7.

Hereinafter, a specific operation of the information system A in this embodiment will be described. FIG. 1 shows a conceptual diagram of the information system A.

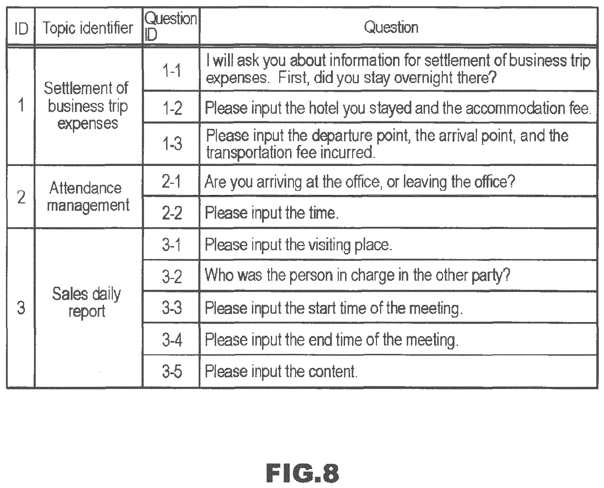

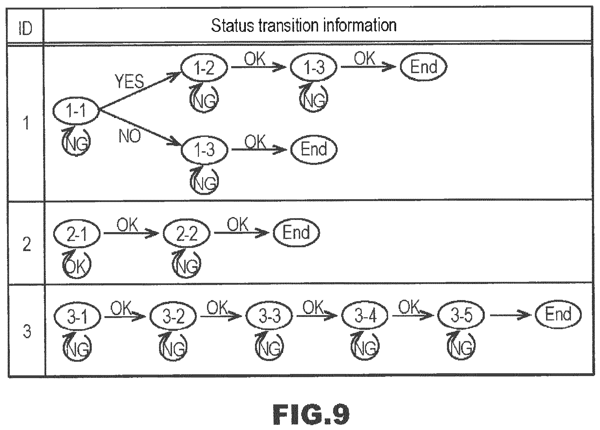

It is assumed that interaction control information is stored in the interaction storage unit 11 of the interactive apparatus 1. The interaction control information has the question information management table shown in FIG. 8, and the status transition information management table shown in FIG. 9. The interaction control information may contain information for performing other interaction with a user.

The question information management table is a table for managing, for each topic, question information that is to be output from the interactive apparatus 1 to a user. The question information management table has one or more records each having "ID", "topic identifier", "question ID", and "question information". "ID" is information for identifying a record. "Topic identifier" is information for identifying a topic. Examples of the topic include "settlement of business trip expenses", "attendance management", and "sales daily report", which respectively correspond to the external processing apparatuses 4. "Question ID" is information for identifying a question. "Question information" is question information that is to be output to the user terminal 3.

The status transition information management table manages status transition information for each topic. The status transition information management table has, for each topic, records each having "ID" and "status transition information". "ID" is information for identifying a record, and corresponds to "ID" in FIG. 8. "Status transition information" is information related to transition between question information and answer information, wherein a node refers to "question ID", and a character string at an edge refers to a classification result of the answer information. That is to say, in the status transition information with "ID=1" in FIG. 9, in the case in which the question information identified with the question ID "1-1" is output to the user terminal 3, if the answer information that has been input by a user is answer information classified as "Yes", then the question information identified with the question ID "1-2" is output to the user terminal 3. On the other hand, if the answer information that has been input by a user is answer information classified as "No", then the question information identified with the question ID "1-3" is output to the user terminal 3. If the answer information that has been input by a user is inappropriate information that is classified as neither "Yes" nor "No", the information is taken as "NG", and the question information identified with the question ID "1-1" is again output to the user terminal 3.

For example, after the question information identified with the question ID "1-2" is output to the user terminal 3, if the answer information that has been input by a user is detected and predetermined desired information (information containing "hotel name" and "accommodation fee") is acquired from the answer information (in the case of "OK"), then the question information identified with the question ID "1-3" is output to the user terminal 3, whereas, if predetermined desired information is not acquired from the answer information (in the case of "NG"), the question information identified with the question ID "1-2" is again output to the user terminal 3. In the case of "NG", interaction control information stored in the interaction storage unit 11 may be additionally used to acquire response information corresponding to the answer information. For example, if the answer information is "I don't remember.", the interactive unit 13 may acquire the response information "Try hard to recall it."

If the question information identified with the question ID "1-3" is output to the user terminal 3 and only partial information (e.g., only "hotel name") among predetermined desired information (e.g., "hotel name" and "accommodation fee") is acquired from the answer information, the interactive apparatus 1 preferably outputs question information (e.g., "Please input the accommodation fee.") for acquiring the remaining information (e.g., "accommodation fee") to the user terminal 3. In this case, for example, if only "hotel name" is acquired in the status transition information in FIGS. 8 and 9, information for transition to a node of the question information "Please input the accommodation fee." is added. For example, the interactive unit 13 of the interactive apparatus 1 detects that "accommodation fee" has not been acquired, and generates the question information "Please input the accommodation fee".

Furthermore, the node "end" in the status transition information indicates an end of the interaction.

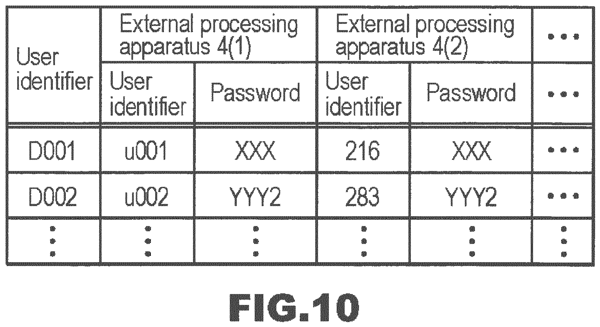

Furthermore, the login information management table shown in FIG. 10 is stored in the login information storage unit 211 of the control apparatus 2. The login information management table is a table for managing login information of a user who interacts with the interactive apparatus 1. The login information management table has one or at least two records having login information for each "user identifier" and for each external processing apparatus 4. "User identifier" is a user identifier when using the interactive apparatus 1. The login information for each external processing apparatus 4 has "user identifier" and "password". If the login information containing the user identifier of the interactive apparatus 1 is the same as the login information on each external processing apparatus 4, the login information management table is not necessary. With the Single-Sign-On technique, the login processing to external processing apparatus 4 is not necessary.

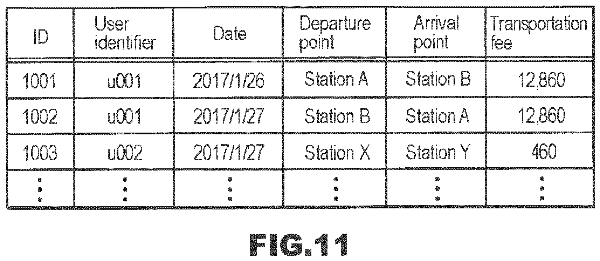

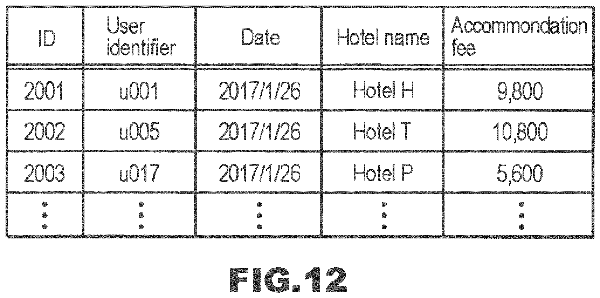

Furthermore, a first external processing apparatus 4 (hereinafter, referred to as an "external processing apparatus 4(1)") is a server apparatus for managing information on settlement of business trip expenses. In the external storage unit 41 of the external processing apparatus 4(1), a trip expense management table with the structure shown in FIG. 11 and an accommodation expense management table with the structure shown in FIG. 12 are stored. In the trip expense management table, one or more records each having "ID", "user identifier", "date", "departure point", "arrival point", and "transportation fee" can be stored. "ID" is information for identifying a record. In the accommodation expense management table, one or more records each having "ID", "user identifier", "date", "hotel name", and "accommodation fee" can be stored.

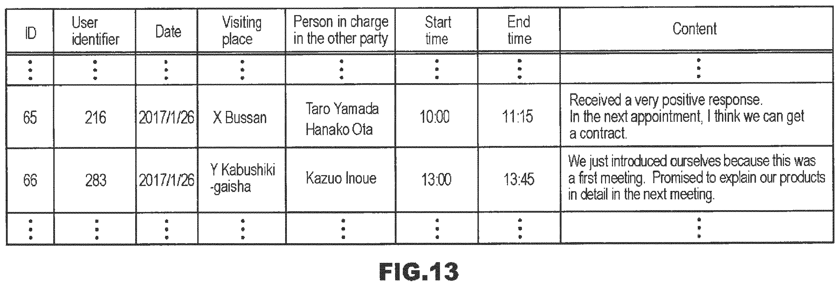

Moreover, a second external processing apparatus 4 (hereinafter, referred to as an "external processing apparatus 4(2)") is a server apparatus for managing information on sales daily reports. In the external storage unit 41 of the external processing apparatus 4(2), a sales daily report management table with the structure shown in FIG. 13 is stored. In the sales daily report management table, one or more records each having "ID", "user identifier", "date", "visiting place", "person in charge in the other party", "start time", "end time", and "content" can be stored. "Content" is a result, a record, or the like of a business visit.

It is assumed that, in this situation, a user W with the user identifier "D001" accesses the interactive apparatus 1 in the following manner using his or her user terminal 3, and registers information on settlement of business trip expenses and information on sales daily reports, through interaction with the interactive apparatus 1. Hereinafter, two specific examples will be described. Specific Example 1 shows a case in which the user W registers information on settlement of business trip expenses to the external processing apparatus 4(1). Specific Example 2 shows a case in which the user W registers information on sales daily reports to the external processing apparatus 4(2).

### Specific Example 1

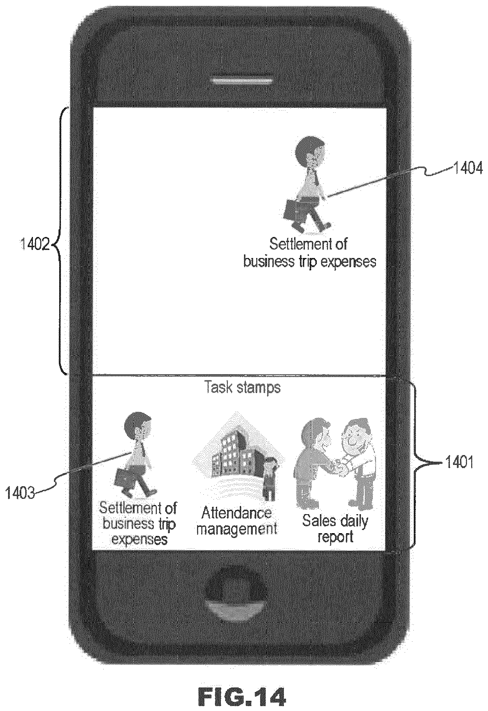

First, it is assumed that a user starts an interaction app installed in his or her user terminal 3, and displays a task stamp. FIG. 14 shows this display example. In FIG. 14, 1401 denotes a task stamp display area. 1402 is a communication progress display area. The task stamp in this example corresponds to a topic identifier. The task stamp "trip expense settlement" corresponds to the topic identifier "settlement of business trip expenses". The task stamp "attendance management" corresponds to the topic identifier "attendance management". Furthermore, the task stamp "sales daily report" corresponds to the topic identifier "sales daily report".

It is assumed that the user W selects the task stamp "trip expense settlement" 1403 from among the task stamps in 1401.

Then, the task stamp "trip expense settlement" is displayed in the communication progress display area 1402 (see 1404). This processing is known technique.

Next, the user transmitting unit 34 of the user terminal 3 transmits the task stamp "trip expense settlement" 1404 to the interactive apparatus 1. The user transmitting unit 34 may transmit the topic identifier "settlement of business trip expenses" corresponding to the task stamp "trip expense settlement" 1404, or may transmit the task stamp 1404 and the topic identifier "settlement of business trip expenses".

Next, the topic receiving unit 12 of the interactive apparatus 1 receives the task stamp 1404 from the user terminal 3. The topic receiving unit 12 acquires the topic identifier "settlement of business trip expenses" corresponding to the task stamp 1404. It is also possible that topic identifiers are stored in the interaction storage unit 11 in association with task stamps, and the topic receiving unit 12 acquires the topic identifier corresponding to the received task stamp 1404 from the interaction storage unit 11. It is also possible to consider that the acquiring the topic identifier "settlement of business trip expenses" is receiving the topic identifier "settlement of business trip expenses". The topic receiving unit 12 may receive the topic identifier "settlement of business trip expenses" from the user terminal 3.

Next, the question transmitting part 131 acquires question information (the question information with the question ID= "1-1") corresponding to the received topic information "settlement of business trip expenses", and transmits it to the user terminal 3 of the user W.

Next, the user receiving unit 35 of the user terminal 3 receives the question information with the question ID "1-1". The user output unit 36 performs voice synthesis and outputs a voice "I will ask you about information for settlement of business trip expenses. First, did you stay overnight there?".

Next, it is assumed that the user W utters "Yes". The user accepting unit 32 of the user terminal 3 accepts the voice "Yes". Next, the user processing unit 33 performs speech recognition on the voice "Yes", and acquires a character string "Yes". Next, the user transmitting unit 34 transmits the character string "Yes" to the interactive apparatus 1.

Next, the answer receiving part 132 of the interactive apparatus 1 receives the answer information "Yes" from the user terminal 3.

Next, the determining part 133 determines that the answer information "Yes" is neither information containing an information group that is to be accumulated, nor a search instruction.

The determining part 133 acquires the question ID "1-2" corresponding to the received answer information "Yes", based on the status transition information with "ID=1" in FIG. 9.

Next, the question transmitting part 131 acquires the question information with the question ID "1-2" from the question information management table in FIG. 8, and transmits it to the user terminal 3 of the user W.

Next, the user receiving unit 35 of the user terminal 3 receives the question information with the question ID "1-2". The user output unit 36 performs voice synthesis and outputs a voice "Please input the hotel you stayed and the accommodation fee".

Next, it is assumed that the user W utters "Hotel H 9800 yen". The user accepting unit 32 of the user terminal 3 accepts the voice "Hotel H 9800 yen". Next, the user processing unit 33 performs speech recognition on the voice "Hotel H", and acquires a character string "Hotel H 9800 yen". Next, the user transmitting unit 34 transmits the character string "Hotel H" to the interactive apparatus 1.

Next, the answer receiving part 132 of the interactive apparatus 1 receives the answer information "Hotel H 9800 yen" from the user terminal 3.

Next, the determining part 133 determines that the answer information "Hotel H 9800 yen" is information containing an information group that is to be accumulated.

Next, the information group acquiring unit 141 acquires the information "hotel name: Hotel H" and "accommodation fee:9800" corresponding to the topic information, from the answer information received by the interactive unit 13. Next, the information group acquiring unit 141 acquires the date "2017/1/26" from an unshown clock. The information group acquiring unit 141 acquires the information group "<hotel name> Hotel H, <accommodation fee> 9800, <date> 2017/1/26".

Next, the accumulating unit 142 transmits the acquired information group, the topic identifier "settlement of business trip expenses", and the user identifier "D001" to the control apparatus 2. It is also possible to consider that the information group includes the topic identifier "settlement of business trip expenses" and the user identifier "D001".

Next, the information group receiving unit 22 of the control apparatus 2 receives the information group "<hotel name> Hotel H, <accommodation fee> 9800, <date> 2017/1/26", the topic identifier "settlement of business trip expenses", and the user identifier "D001".

Next, the determining unit 231 determines based on the topic identifier "settlement of business trip expenses" that the external processing apparatus 4 that is to process the information group "<hotel name> Hotel H, <accommodation fee> 9800, <date> 2017/1/26" is the external processing apparatus 4(1).

Next, the input screen transmission instructing part 2321 transmits an instruction to transmit a login screen, to the external processing apparatus 4(1). The input screen receiving part 2322 receives a login screen from the external processing apparatus 4(1), in response to the transmission of the transmission instruction.

Next, the information group input part 2323 acquires login information (u001, XXX) of the external processing apparatus 4(1), which is login information corresponding to the received user identifier "D001", from the login information management table in FIG. 10.

Next, the information group input part 2323 also inputs the acquired login information to the login screen, and transmits it to the external processing apparatus 4(1). With this processing, the login processing is performed on the external processing apparatus 4(1).

Next, the control processing unit 23 determines that the received information group "<hotel name> Hotel H, <accommodation fee> 9800, <date> 2017/1/26" is to be accumulated.

Next, the input screen transmission instructing part 2321 transmits an instruction to transmit an information input screen, to the external processing apparatus 4(1). The input screen receiving part 2322 receives an input screen from the external processing apparatus 4(1) in response to the instruction to transmit the input screen.

The information group input part 2323 inputs the received information group "<hotel name> Hotel H, <accommodation fee> 9800, <date> 2017/1/26", to the received input screen. Next, the information group input part 2323 inputs an accumulation instruction, to the input screen to which the information group has been input. The information group input part 2323 transmits an instruction to accumulate the information group to the external processing apparatus 4(1).

Next, the external receiving unit 42 of the external processing apparatus 4(1) receives the information group "<hotel name> Hotel H, <accommodation fee> 9800, <date> 2017/1/26". The external processing unit 43 acquires the user identifier "u001" in the external processing apparatus 4(1) of the user W, and constructs a record that is to be accumulated. The external processing unit 43 accumulates the record. This record is a record with "ID=2001" in FIG. 12. It is assumed that the user identifier "u001" of the user W has been held by the external processing apparatus 4(1) from the time of login.

Next, the external transmitting unit 44 of the external processing apparatus 4(1) transmits a notice indicating that accumulation of information on the accommodation fee and the like has been completed, to the control apparatus 2.

Next, the control apparatus 2 receives the notice indicating that the accumulation has been completed, and transmits it to the interactive apparatus 1.

Next, the interactive unit 13 of the interactive apparatus 1 receives the notice indicating that the accumulation has been completed, and transmits it to the user terminal 3.

Next, the user receiving unit 35 of the user terminal 3 receives the notice indicating that the accumulation has been completed. The user output unit 36 outputs a voice "accumulation has been completed".

Next, the question transmitting part 131 acquires the question information with the question ID "1-3", and transmits it to the user terminal 3 of the user W.

Next, the user receiving unit 35 of the user terminal 3 receives question information with the question ID "1-3". The user output unit 36 performs voice synthesis and outputs a voice "Please input the departure point, the arrival point, and the transportation fee incurred".

Next, it is assumed that the user W utters "the departure point was Station A, and the arrival point was Station B. It was 12860 yen". The user accepting unit 32 of the user terminal 3 accepts the voice. Next, the user processing unit 33 performs speech recognition on the voice, and acquires a character string "the departure point was Station A, and the arrival point was Station B. It was 12860 yen". Next, the user transmitting unit 34 transmits the character string to the interactive apparatus 1.

Next, the answer receiving part 132 of the interactive apparatus 1 receives the answer information "the departure point was Station A, and the arrival point was Station B. It was 12860 yen" from the user terminal 3.

Next, the determining part 133 determines that this answer information is information containing an information group that is to be accumulated.

Next, the information group acquiring unit 141 performs morphological analysis on the answer information received by the interactive unit 13, and acquires the information "departure point: Station A, arrival point: Station B, transportation fee:12860". Next, the information group acquiring unit 141 acquires the date "2017/1/26" from an unshown clock. The information group acquiring unit 141 acquires the information group "<departure point> Station A, <arrival point> Station B, <transportation fee> 12860, <date> 2017/1/26".

Next, the accumulating unit 142 transmits the acquired information group, the topic identifier "settlement of business trip expenses", and the user identifier "D001" to the control apparatus 2.

Next, the information group receiving unit 22 of the control apparatus 2 receives the information group "departure point: Station A, arrival point: Station B, transportation fee:12860" and the topic identifier "settlement of business trip expenses" and the user identifier "D001".

Next, the determining unit 231 determines based on the topic identifier "settlement of business trip expenses" that the external processing apparatus 4 that is to process the information group is the external processing apparatus 4(1).

Next, the control processing unit 23 determines that the received information group is to be accumulated.

Next, the input screen transmission instructing part 2321 transmits an instruction to transmit the input screen of information on the transportation fee settlement, to the external processing apparatus 4(1). The input screen receiving part 2322 receives an input screen from the external processing apparatus 4(1) in response to the instruction to transmit the input screen.

The information group input part 2323 inputs the received information group to the received input screen. Next, the information group input part 2323 inputs an accumulation instruction, to the input screen to which the information group has been input. The information group input part 2323 transmits an instruction to accumulate the information group to the external processing apparatus 4(1).

Next, the external receiving unit 42 of the external processing apparatus 4(1) receives the information group "<departure point> Station A, <arrival point> Station B, <transportation fee> 12860, <date> 2017/1/26". The external processing unit 43 acquires the user identifier "u001" in the external processing apparatus 4(1) of the user W, and constructs a record that is to be accumulated. The external processing unit 43 accumulates the record. This record is a record with "ID=1001" in FIG. 11. It is assumed that the user identifier "u001" of the user W has been held by the external processing apparatus 4(1) at the time of login.

Next, the external transmitting unit 44 of the external processing apparatus 4(1) transmits a notice indicating that accumulation of information on the transportation fee and the like has been completed, to the control apparatus 2.

Next, the control apparatus 2 receives the notice indicating that the accumulation has been completed, and transmits it to the interactive apparatus 1.

Next, the interactive unit 13 of the interactive apparatus 1 receives the notice indicating that the accumulation has been completed, and transmits it to the user terminal 3. For example, the interactive unit 13 acquires "Do you input a next task ?" according to the node "end" in the status transition information, and transmits it to the user terminal 3.

Next, the user receiving unit 35 of the user terminal 3 receives the notice indicating that the accumulation has been completed and the like. The user output unit 36 outputs "Accumulation has been completed. Do you input a next task ?".

As described above, in this specific example, it is possible to accumulate plurality of types of information (information on an accommodation fee, and information on a transportation fee) in the external processing apparatus 4, through natural through interaction between a user and the interactive apparatus 1 (interactive robot) starting from the start with one task stamp.

### Specific Example 2

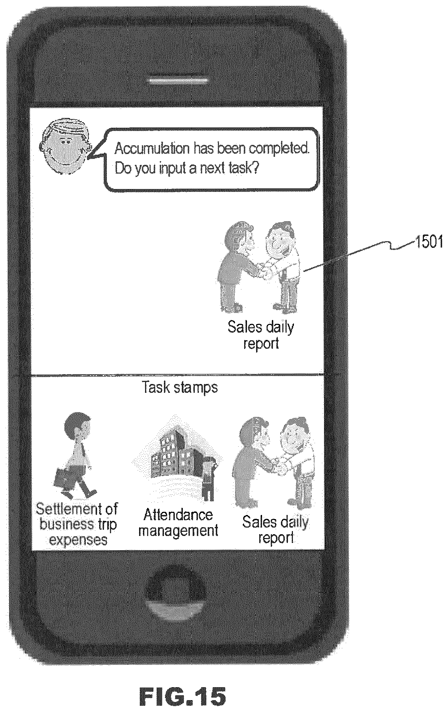

It is assumed that, continuously from the processing in Specific Example 1, the user W sees the output "Accumulation has been completed. Do you input a next task ?", and selects the stamp "sales daily report" from among the task stamps of the user terminal 3 in FIG. 14. FIG. 15 shows an output example of the user terminal 3 in this case.

The task stamp "sales daily report" is displayed in the communication progress display area (see 1501).

Next, the user transmitting unit 34 of the user terminal 3 transmits the task stamp "sales daily report" 1501 to the interactive apparatus 1. The user transmitting unit 34 may transmit the topic identifier "sales daily report" corresponding to the task stamp 1501, or may transmit the task stamp 1501 and the topic identifier "sales daily report".

Next, the topic receiving unit 12 of the interactive apparatus 1 receives the task stamp 1501 from the user terminal 3. The topic receiving unit 12 acquires the topic identifier "sales daily report" corresponding to the task stamp 1501. The acquiring the topic identifier "sales daily report" may be considered as receiving the topic identifier "sales daily report". The topic receiving unit 12 may receive the topic identifier "sales daily report" from the user terminal 3.

Next, the question transmitting part 131 acquires the question information (the question information with the question ID= "3-1") corresponding to the received topic information "sales daily report", and transmits it to the user terminal 3 of the user W.

Next, the user receiving unit 35 of the user terminal 3 receives the question information with the question ID "3-1". The user output unit 36 output "Please input the visiting place".

Next, the user W utters "X Bussan". The user accepting unit 32 of the user terminal 3 accepts the voice "X Bussan". Next, the user processing unit 33 performs speech recognition on the voice "X Bussan", and acquires a character string "X Bussan". Next, the user transmitting unit 34 transmits the character string "X Bussan" to the interactive apparatus 1.

Next, the answer receiving part 132 of the interactive apparatus 1 receives the answer information "X Bussan" from the user terminal 3.

Next, the determining part 133 determines that the answer information "X Bussan" is information containing an information group that is to be accumulated.

Next, the interaction control unit 14 determines not to accumulate the information group because all pieces of information corresponding to the topic information "sales daily report" have not been acquired. The information group acquiring unit 141 acquires the information "X Bussan" that is to be accumulated, from the answer information, and temporarily stores it in an unshown buffer.

The determining part 133 acquires the question ID "3-2" corresponding to the received answer information that is appropriate (that matches OK), based on the status transition information with "ID=3" in FIG. 9.

Next, the question transmitting part 131 acquires the question information with the question ID "3-2" from the question information management table in FIG. 8, and transmits it to the user terminal 3 of the user W.

Next, the user receiving unit 35 of the user terminal 3 receives the question information with the question ID "3-2". The user output unit 36 outputs "Who was the person in charge in the other party?".

Next, it is assumed that the user W utters "I wonder who they were. I don't remember their names". The user accepting unit 32 of the user terminal 3 accepts the voice. Next, the user processing unit 33 performs speech recognition on the voice, and acquires a character string "I wonder who they were. I don't remember their names". Next, the user transmitting unit 34 transmits the character string to the interactive apparatus 1.

Next, the answer receiving part 132 of the interactive apparatus 1 receives the answer information "I wonder who they were. I don't remember their names." from the user terminal 3.

Next, the determining part 133 determines that the answer information is neither information containing an information group that is to be accumulated, nor a search instruction.

The determining part 133 acquires the question ID "3-2" corresponding to the answer information that matches NG, based on the status transition information with "ID=1" in FIG. 9.

Next, the question transmitting part 131 acquires the question information with the question ID "3-2" from the question information management table in FIG. 8, and again transmits it to the user terminal 3 of the user W.

It is also possible that, after the determining part 133 determines that the answer information is neither information containing an information group that is to be accumulated, nor a search instruction, the interactive apparatus 1 acquires response information (e.g., "Recall them!") corresponding to the input "I wonder who they were. I don't remember their names." using, for example, a known interactive technique, and transmit it to the user terminal 3.

Next, the user receiving unit 35 of the user terminal 3 receives the question information with the question ID "3-2". The user output unit 36 again outputs the question information.

Next, it is assumed that the user W sees business cards, and utters "They were Mr. Taro Yamada and Ms. Hanako Ota". The user accepting unit 32 of the user terminal 3 accepts the voice. Next, the user processing unit 33 performs speech recognition on the voice, and acquires a character string "Mr. Taro Yamada and Ms. Hanako Ota". Next, the user transmitting unit 34 transmits the character string to the interactive apparatus 1.

Next, the answer receiving part 132 of the interactive apparatus 1 receives the answer information "Mr. Taro Yamada and Ms. Hanako Ota" from the user terminal 3.

Next, the determining part 133 determines that this answer information is information containing an information group that is to be accumulated.

Next, the interaction control unit 14 determines not to accumulate the information group because all pieces of information corresponding to the topic information "sales daily report" have not been acquired. The information group acquiring unit 141 acquires the information "Taro Yamada Hanako Ota" that is to be accumulated, from the answer information, and temporarily stores it in an unshown buffer.

The determining part 133 acquires the question ID "3-3" corresponding to the received answer information that is appropriate (that matches OK), based on the status transition information with "ID=3" in FIG. 9.

Subsequently, it is assumed that the interaction between the user W and the interactive apparatus 1 continues according to the status transition information with "ID=3" in FIG. 9, and the interactive apparatus 1 has acquired all pieces of information (visiting place, person in charge in the other party, start time, end time, content) that have to be accumulated.

Next, the information group acquiring unit 141 acquires an information group "<visiting place> X Bussan, <person in charge in the other party> Taro Yamada Hanako Ota, <start time "> 10:00, <end time> 11:15, <content> Received a very positive response. In the next..., <date> 2017/1/26".

Next, the accumulating unit 142 transmits the acquired information group, the topic identifier "sales daily report", and the user identifier "D001" to the control apparatus 2.

Next, the information group receiving unit 22 of the control apparatus 2 receives the information group, the topic identifier "sales daily report", and the user identifier "D001".

Next, the determining unit 231 determines based on the topic identifier "sales daily report" that the external processing apparatus 4 that is to process the information group is the external processing apparatus 4(2).

Next, the accumulation control unit 232 acquires login information (216, XXX) of the external processing apparatus 4(2), which is login information corresponding to the user identifier "D001", from the login information management table in FIG. 10. The accumulation control unit 232 accesses the external processing apparatus 4(2), and performs login processing.

Next, the accumulation control unit 232 transmits the information group "<visiting place> X Bussan, <person in charge in the other party> Taro Yamada Hanako Ota, <start time "> 10:00, <end time> 11:15, <content> Received a very positive response. In the next..., <date> 2017/1/26" to the external processing apparatus 4(2), and transmits an accumulation instruction to the external processing apparatus 4(2).

Next, the external receiving unit 42 of the external processing apparatus 4(2) receives the information group. The external processing unit 43 acquires the user identifier "216" in the external processing apparatus 4(2) of the user W, and constructs a record that is to be accumulated. The external processing unit 43 accumulates the record. This record is a record with "ID=65" in FIG. 13. It is assumed that the user identifier "216" of the user W has been held by the external processing apparatus 4(2) from the time of login.

Next, the external transmitting unit 44 of the external processing apparatus 4(2) transmit a notice indicating that accumulation of information on the accommodation fee and the like has been completed, to the control apparatus 2.

Next, the control apparatus 2 receives the notice indicating that the accumulation has been completed, and transmits it to the interactive apparatus 1.

Next, the interactive unit 13 of the interactive apparatus 1 receives the notice indicating that the accumulation has been completed, and transmits it to the user terminal 3. For example, the interactive unit 13 acquires "Do you input a next task ?" according to the node "end" in the status transition information, and transmits it to the user terminal 3.

Next, the user receiving unit 35 of the user terminal 3 receives the notice indicating that the accumulation has been completed and the like.

The user output unit 36 outputs "Accumulation has been completed. Do you input a next task ?".

As described above, according to this embodiment, it is possible to easily input information related to execution of a task, through interaction.

Furthermore, according to this embodiment, it is possible to easily input a plurality of types of information related to execution of tasks(e.g., information on settlement of business trip expenses, sales daily report, etc.), through interaction., to two or more different external information processing apparatuses

Furthermore, according to this embodiment, it is possible to easily input information related to execution of tasks acquired through a series of interaction, through interaction, to two or more different external information processing apparatuses, two or more different databases, or two or more different files.

Moreover, according to this embodiment, it is possible for a user to input information related to execution of a task while utilizing resources of existing business systems, through natural interaction with the interactive apparatus. It is possible for a user to log in to the information processing apparatus and input information related to execution of a task, through interaction with the interactive apparatus.

Note that, in this embodiment, output of information on the user terminal 3 may be in the form of voice or display. It is preferable that, as shown in FIGS. 14 and 15, information of user input and received information are displayed in the form of an interactive app.

The processing in this embodiment may be realized by software. The software may be distributed by software downloads or the like. Furthermore, the software may be distributed in a form where the software is stored in a storage medium such as a CD-ROM. Note that the same is applied to other embodiments described in this specification. The software that realizes the interactive apparatus 1 in this embodiment may be the following sort of program. Specifically, this program is a program for causing a computer to function as: a topic receiving unit that receives topic information, which is a topic for identifying a task, from a user terminal; an interactive unit that acquires question information indicating a question corresponding to the topic information and transmits the question information to the user terminal, and that receives answer information indicating an answer corresponding to the question information, from the user terminal; an information group acquiring unit that acquires an information group, which is two or more pieces of information satisfying a predetermined condition, from the one or more pieces of answer information received by the interactive unit; and an accumulating unit that accumulates the information group in an external information processing apparatus.

The software that realizes the control apparatus 2 in this embodiment may be the following sort of program. Specifically, this program is a program for causing a computer to function as: an information group receiving unit that receives an information group from an interactive apparatus; a determining unit that determines an information processing apparatus in which the information group is to be accumulated, according to the information group; an accumulation control unit that accumulates the information group in the information processing apparatus determined by the determining unit.

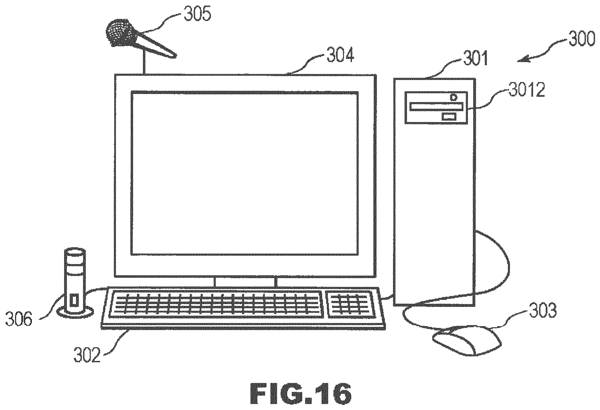

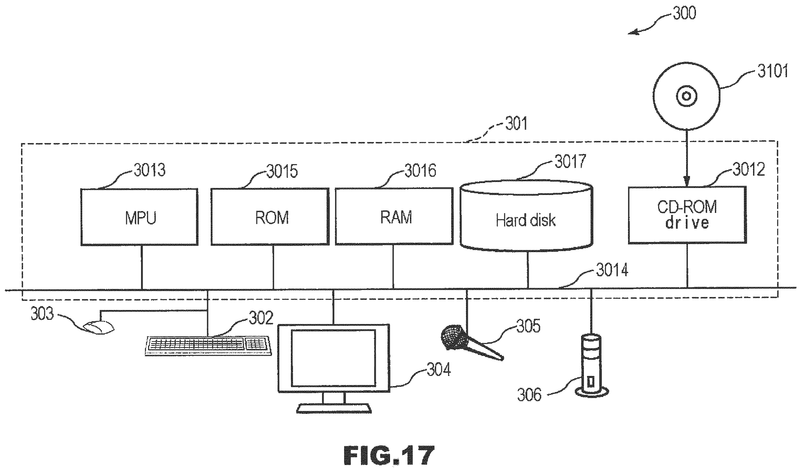

FIG. 16 shows the external appearance of a computer that executes the programs described in this specification to realize the interactive apparatus and the like in the foregoing various embodiments. The foregoing embodiments may be realized using computer hardware and a computer program executed thereon. FIG. 16 is a schematic view of a computer system 300. FIG. 17 is a block diagram showing the system 300.

In FIG. 16, the computer system 300 includes a computer 301 including a CD-ROM drive, a keyboard 302, a mouse 303, and a monitor 304.

In FIG. 17, the computer 301 includes not only the CD-ROM drive 3012, but also an MPU 3013, a bus 3014 connected to the MPU 3013 and the CD-ROM drive 3012, a ROM 3015 in which a program such as a boot up program is to be stored, a RAM 3016 that is connected to the MPU 3013 and is a memory in which a command of an application program is temporarily stored and a temporary storage area is provided, and a hard disk 3017 in which an application program, a system program, and data are to be stored. Although not shown, the computer 301 may further include a network card that provides connection to a LAN.

The program for causing the computer system 300 to execute the functions of the interactive apparatus 1 and the like in the foregoing embodiments may be stored in a CD-ROM 3101 that is inserted into the CD-ROM drive 3012, and be transmitted to the hard disk 3017. Alternatively, the program may be transmitted via a network (not shown) to the computer 301 and stored in the hard disk 3017. At the time of execution, the program is loaded into the RAM 3016. The program may be loaded from the CD-ROM 3101, or directly from a network.

The program does not necessarily have to include, for example, an operating system (OS) or a third party program to cause the computer 301 to execute the functions of the interactive apparatus 1 and the like in the foregoing embodiments. The program may only include a command portion to call an appropriate function (module) in a controlled mode and obtain desired results. The manner in which the computer system 300 operates is well known, and thus a detailed description thereof has been omitted.

It should be noted that, in the programs, in a step of transmitting information, a step of receiving information, or the like, processing that is performed by hardware, for example, processing performed by a modem or an interface card in the transmitting step (processing that can be performed only by hardware) is not included.

Furthermore, the computer that executes this program may be a single computer, or may be multiple computers. That is to say, centralized processing may be performed, or distributed processing may be performed.

Furthermore, in the foregoing embodiments, it will be appreciated that two or more communication parts in one apparatus may be physically realized by one medium.

In the foregoing embodiments, each process may be realized as centralized processing using a single apparatus, or may be realized as distributed processing using multiple apparatuses.

The present invention is not limited to the embodiment set forth herein. Various modifications are possible within the scope of the present invention.

### Industrial Applicability

As described above, the interactive apparatus according to the present invention has an effect that it is possible to easily input information related to execution of a task, through interaction, and thus this apparatus is useful as an interactive apparatus and the like constituting an information system that performs registration of business information.

## Claims

1. An interactive apparatus comprising:
a topic receiving unit that receives topic information, which is a topic for identifying a task, from a user terminal;
an interactive unit that acquires question information indicating a question corresponding to the topic information and transmits the question information to the user terminal, and that receives answer information indicating an answer corresponding to the question information, from the user terminal;
an information group acquiring unit that acquires an information group, which is two or more pieces of information satisfying a predetermined condition, from the one or more pieces of answer information received by the interactive unit; and
an accumulating unit that accumulates the information group in an external information processing apparatus.

2. The interactive apparatus according to claim 1, wherein the accumulating unit accumulates two or more information groups acquired by the information group acquiring unit, in different external information processing apparatuses, according to the information groups.

3. The interactive apparatus according to claim 1,
wherein the information group acquiring unit acquires two or more information groups, from two or more pieces of answer information in a series of interaction between the interactive apparatus and a user terminal, and
the accumulating unit accumulates two or more information groups acquired by the information group acquiring unit, in different external information processing apparatuses, different databases, or different files.

4. The interactive apparatus according to claim 1,
wherein the interactive unit includes:
a question transmitting part that acquires question information indicating a question corresponding to the topic information and transmits the question information to the user terminal;
an answer receiving part that receives answer information indicating an answer corresponding to the question information, from the user terminal; and
a determining part that determines whether to accumulate an information group or to acquire response information, according to the answer information,
in a case in which determination by the determining part is to accumulate an information group, the information group acquiring unit acquires an information group from the answer information, and
in a case in which determination by the determining part is to acquire response information, the question transmitting part acquires response information, which is a response corresponding to the answer information, and transmits the response information to the user terminal.

5. The interactive apparatus according to claim 1, wherein, in response to the topic receiving unit receiving the topic information, the interactive unit transmits question information to the user terminal.

6. The interactive apparatus according to claim 1,
wherein the topic receiving unit receives one of two or more stamp images from a user terminal, and
the interactive unit acquires question information indicating a question corresponding to the topic information corresponding to the one stamp image, and transmits the question information to the user terminal.

7. A control apparatus comprising:
an information group receiving unit that receives an information group from the interactive apparatus according to claim 1;
a determining unit that determines an information processing apparatus in which the information group is to be accumulated, according to the information group; and
an accumulation control unit that accumulates the information group in the information processing apparatus determined by the determining unit.

8. An interactive system comprising the interactive apparatus according to claim 1 and a control apparatus,
wherein the accumulating unit transmits the information group to the control apparatus, and
the control apparatus includes:
an information group receiving unit that receives the information group;
a determining unit that determines an information processing apparatus in which the information group is to be accumulated, according to the information group; and
an accumulation control unit that accumulates the information group in the information processing apparatus determined by the determining unit.

9. The interactive system according to claim 8, wherein the control apparatus further includes:
a search unit that searches one or more external information processing apparatuses, for information that is to be output on a user terminal, according to the information group; and
a control transmitting unit that transmits the information obtained by searching.

10. The interactive system according to claim 8 or 9, wherein the accumulation control unit includes:
an input screen transmission instructing part that transmits an instruction to transmit an information input screen, to an information processing apparatus determined by the determining unit;
an input screen receiving part that receives an input screen from the information processing apparatus in response to the instruction to transmit the input screen; and
an information group input part that inputs the information group to the input screen.

11. The interactive system according to claim 10,
wherein the control apparatus further includes a login information storage unit in which one or more pieces of login information, which is a pair of a user ID and a password to an external information processing apparatus, are stored, and
the information group input part acquires login information corresponding to the user terminal, from the login information storage unit, and also inputs the login information to the input screen.

12. An interactive method realized by a topic receiving unit, an interactive unit, an information group acquiring unit, and an accumulating unit, comprising:
a topic receiving step of the topic receiving unit receiving topic information, which is a topic for identifying a task, from a user terminal;
an interacting step of the interactive unit acquiring question information indicating a question corresponding to the topic information and transmitting the question information to the user terminal, and receiving answer information indicating an answer corresponding to the question information, from the user terminal;
an information group acquiring step of the information group acquiring unit acquiring an information group, which is two or more pieces of information satisfying a predetermined condition, from the one or more pieces of answer information received in the interacting step; and
an accumulating step of the accumulating unit accumulating the information group in an external information processing apparatus.

13. A control method realized by an information group receiving unit, a determining unit, and an accumulation control unit, comprising:
an information group receiving step of the information group receiving unit receiving an information group from the interactive apparatus according to claim 1;
a determining step of the determining unit determining an information processing apparatus in which the information group is to be accumulated, according to the information group; and
an accumulation control step of the accumulation control unit accumulating the information group in the information processing apparatus determined in the determining step.
